# FASCICULE DE BREVET EUROPEEN

(11) **EP 4 082 768 B1**
(45) Date de publication et mention de la délivrance du brevet: **18.11.2026**
(21) Numéro de dépôt: 22180145.9
(22) Date de dépôt: 25.04.2018
(51) Int. Cl.: B32B 5/02, B32B 5/24, B32B 27/06, B32B 27/08, B32B 27/12, B32B 27/22, B32B 27/28, B32B 27/30, B32B 27/36, B32B 27/38, B32B 27/40

(54) **STRUCTURE MULTICOUCHE POUR LA REALISATION D'UN REVETEMENT DE SOL SPORTIF POLYVALENT**
MEHRSCHICHTIGE STRUKTUR ZUR ERZEUGUNG EINES MEHRZWECKSPORTFUSSBODENS
MULTILAYER STRUCTURE FOR THE CREATION OF A MULTIPURPOSE SPORTS FLOORING

(30) Priorité: 27.04.2017 FR 1753660
(43) Date de publication de la demande: 02.11.2022
(62) Numéro(s) de document de la (des) demande(s) initiale(s) en application de l'article 76 CBE: 18718843.8 / 3 589 483
(73) Titulaire: GERFLOR, 69009 Lyon 9eme (FR)
(72) Inventeur: PAILLOT, Pierrick, 42800 SAINT-JOSEPH (FR); PUECH, Bastien, 69770 MONTROTTIER (FR)
(74) Mandataire: Ipsilon

(56) Documents cités:
- EP-A2- 0 213 517
- WO-A1-2006/007862

## Description

### DOMAINE TECHNIQUE

La présente invention concerne une structure multicouche pour la réalisation d'un revêtement de sol dit « sportif », c'est-à-dire à destination des salles de sport, salles de gym, gymnases polyvalents, ou similaires.

### ART ANTERIEUR

Il est connu de l'état de la technique une structure multicouche pour la réalisation d'un revêtement de sol « sportif ». Un revêtement de sol sportif doit permettre d'assurer la sécurité et la protection de l'utilisateur, notamment en termes d'absorption des chocs ponctuels. Un revêtement de sol sportif ponctuel doit notamment satisfaire la norme NF EN 14904 de juin 2006, selon laquelle le revêtement de sol doit absorber 25% des chocs.

La demande de brevet EP0213517A2 divulgue un exemple d'un tel revêtement de sol.

C'est pourquoi, un sol sportif se présente sous la forme d'une structure multicouche comprenant, d'une manière générale, une couche supérieure d'usure dont les fonctions principales sont la maîtrise de la glissance, la résistance à l'usure, la facilité de nettoyage et l'aspect décoratif, liée à une couche d'envers en mousse de polychlorure de vinyle d'une densité généralement comprise entre 0.30 et 0.40 et d'une épaisseur généralement comprise entre 4 et 7 mm permettant l'absorption des chocs ponctuels.

Ce type de sol sportif donne entière satisfaction à l'utilisateur en termes de sécurité et de protection. Cependant, en pratique, ce type de revêtement de sol est souvent posé dans des gymnases dits polyvalents, c'est-à-dire susceptibles d'accueillir des manifestations extra sportives pouvant dégrader le revêtement de sol.

En effet, la mousse d'envers peut être soumises au trafic, à des charges lourdes ou des impacts non prévus et pouvant indenter et détériorer le revêtement de sol. En effet, si le revêtement de sol sportif est excellent pour absorber les chocs ponctuels, il l'est moins pour résister aux sollicitations susmentionnées.

Pour résoudre ce problème, il est connu d'intégrer dans la conception multicouche du revêtement de sol sportif, au moins une grille de renfort intégrée dans la couche d'usure, voire même de complexer la mousse de polychlorure de vinyle avec une grille supplémentaire. L'utilisation de ces grilles permet de renforcer la structure multicouche en termes de stabilité dimensionnelle et de résistance au trafic. Cependant, cette solution est trop onéreuse et complexe à mettre en œuvre, et n'augmente pas significativement la résistance à l'indentation.

Un autre inconvénient réside dans le fait qu'une grille de renfort, telle qu'une grille de verre, complexée ou non à un support en textile non-tissé, à tendance à se déformer, voire se rompre, irréversiblement sous la charge ce qui diminue la durée de vie du revêtement de sol.

### EXPOSE DE L'INVENTION

L'un des buts de l'invention est donc de proposer une structure multicouche pour la réalisation d'un revêtement de sol sportif et polyvalent, c'est-à-dire permettant d'absorber au moins 25% des chocs ponctuels, tout en résistant au trafic, charges lourdes et impacts, et pouvant notamment satisfaire l'exigence de poinçonnement définie dans la norme NF EN 14904 de juin 2006 qui prévoit une déformation résiduelle mesurée selon la norme NF EN 1516 d'octobre 1999 inférieure à 0,5 mm.

Un autre objectif de la présente invention est de fournir un tel revêtement de sol capable de résister au poinçonnement avec une déformation résiduelle mesurée selon la norme NF EN 1516 d'octobre 1999 inférieure à 0,1 mm.

A cet effet, il est proposé une structure multicouche pour la réalisation d'un revêtement de sol sportif conforme à celle de l'état de la technique en ce qu'elle comprend une couche supérieure d'usure composée d'au moins une couche de surface, liée à une couche d'envers en mousse de polychlorure de vinyle.

Selon l'invention, la structure multicouche comprend un film polymère, disposé entre la couche de surface et la couche d'envers en mousse, et présentant une raideur supérieure à 100 N/mm et un module d'Young supérieur à 1,5 GPa, afin de limiter les phénomènes d'indentation dans la mousse en permettant une meilleure répartition des contraintes et une diminution de l'effet de cisaillement sur les parois des cellules de la mousse, correspondant à la déformation perpendiculaire à la pénétration du poinçon. Le couple raideur et module d'Young est important pour améliorer la résistance au poinçonnement. Si le film polymère présente un module d'Young supérieur à 1,5 GPa mais qu'il ne présente pas une raideur suffisante, la résistance au poinçonnement ne sera pas améliorée.

Le film présente d'autres avantages, il permet notamment de stabiliser la structure multicouche en y apportant plus de rigidité, et permet également de conserver une bonne résistance au fluage.

Le film permet également d'homogénéiser l'expansion de la mousse qui peut être directement enduite sur le film, contrairement à une expansion sur une grille de verre possédant une surface irrégulière. Dans cette configuration, l'envers de la couche de mousse est parfaitement lisse et permet éventuellement d'imprimer un décor avec un bon rendu.

Le film polymère présente avantageusement une épaisseur supérieure à 30 µm, et de préférence comprise entre 50 µm et 250 µm. En dessous de 30 µm le film serait trop cassant et au-dessus de 250 µm la manipulation du film serait difficile ce qui entrainerait un surcoût de production.

Le film polymère présente avantageusement une raideur comprise entre 100 N/mm et 300 N/mm, et un module d'Young compris entre 1,5 GPa et 5 GPa. En dessous de 100 N/mm la raideur n'est pas suffisante pour améliorer la résistance au poinçonnement au-dessus de 300 N/mm, le film devient difficile à manipuler lors du procédé de fabrication de la structure multicouche, notamment lors du passage sur des mandrins, etc. En dessous de 1,5 GPa cela oblige à utiliser un film polymère très épais pour obtenir une raideur supérieure à 100 N/mm et au-dessus de 5 GPa cela oblige à utiliser un film polymère très fin pour obtenir une raideur inférieure à 300 N/mm.

Le polymère utilisé pour le film est choisi parmi les polymères thermoplastiques tels que le polychlorure de vinyle (PVC), le polyéthylène téréphtalate (PET), le polyméthacrylate de méthyle (PMMA), le polyéthylène téréphtalate glycol (PETG), le polysulfure de phénylène (PPS).

Selon une forme de réalisation particulière, le film polymère est un film comprenant du polychlorure de vinyle et moins de 10% en poids de plastifiant.

Selon une autre forme de réalisation, le film est un film de polyéthylène téréphtalate formant un complexe avec au moins une couche de copolyester d'épaisseur de l'ordre du micromètre, disposée sur la face du film destinée à être en contact avec la mousse de polychlorure de vinyle, afin d'améliorer l'adhérence du film polymère sur le polychlorure de vinyle de la mousse.

D'une manière particulière, le film polymère peut former un complexe avec au moins un voile de verre ou un textile non-tissé disposé sur la face du film destinée à être en contact avec la mousse de polychlorure de vinyle. De cette manière, il est possible d'enduire la mousse directement sur la face envers du voile de verre ou du textile non-tissé et d'obtenir une véritable imprégnation de la mousse de polychlorure de vinyle et d'améliorer ainsi l'adhérence de la mousse de polychlorure de vinyle au film polymère.

Afin d'améliorer la tenue du film polymère lors du procédé de fabrication, ce dernier peut être complexé avec au moins une grille de renfort, telle qu'une grille de verre ou une grille de polyester.

Le film peut être disposé entre la couche d'usure et la mousse de polychlorure de vinyle, ou bien être intégré dans l'épaisseur de la couche d'usure, non directement en contact avec la mousse de polychlorure de vinyle.

### DESCRIPTION SOMMAIRE DES FIGURES

D'autres avantages et caractéristiques ressortiront mieux de la description qui va suivre, donnée à titre d'exemple non limitatif, de la structure multicouche selon l'invention, à partir des dessins annexés dans lesquels :
- la figure 1 est une représentation schématique et en coupe transversale d'un premier exemple de réalisation de la structure multicouche selon l'invention ;
- la figure 2 est une représentation schématique similaire à celle de la figure 1, illustrant un second mode de réalisation de la structure multicouche selon l'invention ;
- la figure 3 est une présentation schématique similaire à celle de la figure 1, le film polymère étant intégré dans l'épaisseur de la couche d'usure ;
- la figure 4 est une représentation schématique similaire à celle de la figure 1, le film polymère étant complexé entre deux couches de copolyester ;
- la figure 5 est une représentation schématique similaire à celle de la figure 1, le film polymère étant complexé entre deux voiles de verre ou textiles non-tissés ;
- la figure 6 est une représentation schématique similaire à celle de la figure 1, le film polymère formant un complexe avec une grille de renfort.

### DESCRIPTION DETAILLEE DE L'INVENTION

L'invention concerne une structure multicouche (1) pour la réalisation d'un revêtement de sol ponctuel dit « sportif » en ce sens qu'il permet d'absorber au moins 25% des chocs selon le test défini dans la norme NF EN 14904 de juin 2006, et dit « polyvalent » en ce sens qu'il permet de résister au trafic, au charges lourdes, et au poinçonnement avec une déformation résiduelle inférieure à 0,5mm et de préférence inférieure à 0,1 mm.

La structure multicouche (1) selon l'invention peut présenter toute forme, notamment en panneau, dalle, et de préférence en rouleau.

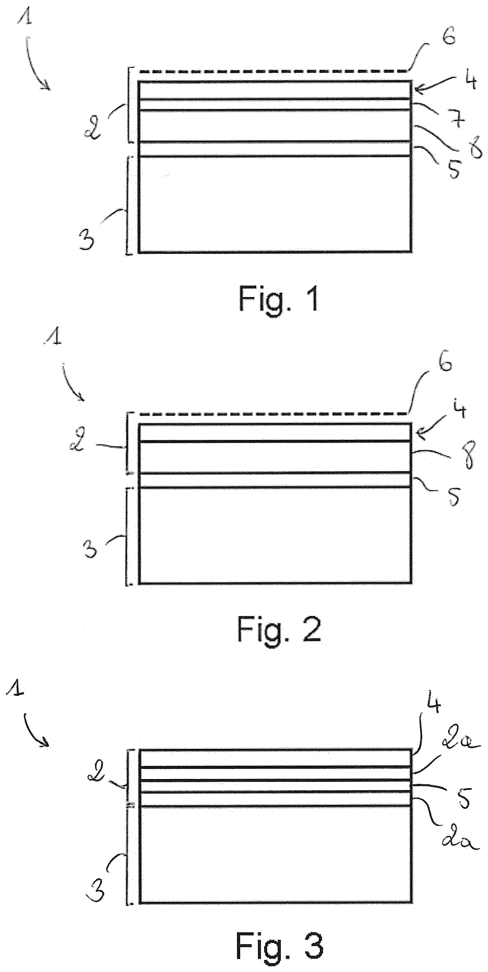

En référence aux figures 1 à 6, la structure multicouche (1) comprend une couche supérieure d'usure (2) dont les fonctions principales sont la maîtrise de la glissance, la résistance à l'usure, la facilité de nettoyage et l'aspect décoratif. La couche d'usure (2) est liée par toute technique appropriée, telle que collage par exemple, à une couche d'envers (3) en mousse de polychlorure de vinyle. La couche de mousse (3) permet l'absorption des chocs ponctuels et est destinée à être collée sur le sol.

La couche d'usure (2) comprend au moins une couche de surface (4), mais peut également être constituée de plusieurs couches calandrées. La couche d'usure (2) peut ainsi être constituée par une couche calandrée teintée dans la masse, éventuellement obtenue par pressage pour un effet de décor « moucheté », une couche transparente, une couche transparente dont la face envers est liée à un film décoratif, une couche transparente dont la face envers est liée à une couche d'impression.

Plus généralement, la couche d'usure (2) peut être composée de l'une quelconque des couches décrites ci-avant, dont la face envers est liée avec un ou plusieurs plis calandrés, de manière bien connue par l'homme du métier.

La couche de mousse (3) en polychlorure de vinyle est réalisée, par exemple, à partir de Plastisol expansé et présente une densité comprise entre 0,20 et 0,50, préférentiellement entre 0,30 et 0,40 afin de pouvoir satisfaire la norme NF EN 14904 de juin 2006 et absorber au moins 25% des chocs ponctuels.

Selon l'invention, la structure multicouche (1) comprend un film polymère (5), disposé entre la couche de surface (4) et la couche de mousse (3) afin de limiter les phénomènes d'indentation du revêtement lors du poinçonnement. En d'autres termes, le film polymère (5) peut être disposé directement entre la couche de mousse (3) et la couche d'usure (2) (Cf. figures 1, 2 et 4 à 6), ou bien le film peut être intégré sous la couche de surface (4) et dans l'épaisseur de la couche d'usure (2), par exemple entre deux couches calandrées (2a) de la couche d'usure (2) (Cf. figure 3), de manière à ne pas être en contact avec la mousse. Le film polymère (5) selon la présente invention n'est jamais disposé en surface de la structure multicouche (1).

Le film polymère (5) limite les phénomènes d'indentation dans la mousse par une meilleure répartition des contraintes et par une diminution de l'effet de cisaillement sur les parois des cellules de la mousse, c'est-à-dire une diminution de la déformation perpendiculaire à la pénétration d'un poinçon. Le film polymère (5) permet donc de diminuer la déformation plastique maximale de la mousse, et d'améliorer le retour élastique de la structure multicouche et de conserver l'absorption de chocs ponctuels.

Le polymère utilisé pour réaliser le film (5) est choisi parmi les polymères thermoplastiques tels que le polychlorure de vinyle, le polyéthylène téréphtalate, le polyméthacrylate de méthyle, le polyéthylène téréphtalate glycol, le polysulfure de phénylène.

Le film polymère (5) présente une épaisseur supérieure à 30 µm, et de préférence comprise entre 50 µm et 250 µm. Cette plage de valeur permet au film polymère (5) de présenter une raideur supérieure à 100 N/mm, et notamment une raideur comprise entre 100 N/mm et 300 N/mm. Une raideur supérieure à 300 N/mm, rendrait le film difficile à manipuler lors du procédé de fabrication de la structure multicouche (1), notamment lors du passage sur des mandrins, etc....

La raideur est une notion d'élasticité en termes de mécanique du solide : efforts et déplacements. Dans les cas géométriquement simples, on peut relier analytiquement ces grandeurs. Par exemple, dans le cas d'un échantillon allongé de section constante chargée en traction-compression, la raideur s'exprime en fonction du module de Young : $On dira que la raideur k = \left(S x E\right) / \left(L\right)$ où :
S est l'aire de la section de l'échantillon ;
E est le module élastique en traction (module d'Young) ;
L est la longueur de l'échantillon.

La méthode qui permet de mesurer cette valeur de raideur pour savoir si une structure multicouche entre dans le champ de protection conféré par les revendications est détaillée ci-après.

La méthode utilisée est un test de traction. Une éprouvette de forme rectangulaire, notamment 25 mm de large et 190 mm de long, est allongée à vitesse de déformation constante, à savoir 50mm/min, par l'intermédiaire d'un dynamomètre jusqu'à rupture. L'essai de caractérisation est construit sur la base de norme ISO 527-3. Avant le test de traction, l'éprouvette est conditionnée à 23°C et 50% d'humidité pendant une durée de 24h. L'épaisseur de l'éprouvette est mesurée dans les mêmes conditions de température, et selon la norme ISO 24346 avec l'utilisation d'un comparateur dans la salle climatisée du dynamomètre.

Le Demandeur a utilisé le dynamomètre commercialisé par la société Lloyd Instruments - AMETEK, modèle LR5K avec mors pneumatiques espacés de 50 mm, et un capteur capacité 5kN classe 0.5 selon la norme ISO 7500-1.

La raideur est ensuite calculée par un logiciel, notamment le logiciel Nexygen Plus 3.0. Le logiciel permet également de calculer le Module de Young de l'éprouvette.

Le film polymère (5) selon l'invention présente avantageusement un module d'Young supérieur à 1,5 GPa, et de préférence compris entre 1,5 GPa et 5 GPa. Le compromis entre épaisseur, raideur et module d'Young est important. Si le film polymère (5) présente un module d'Young supérieur à 1,5 GPa mais qu'il ne présente pas une raideur suffisante, la résistance au poinçonnement ne sera que très peu améliorée.

La raideur et la rigidité du film polymère (5) permet également de stabiliser le produit et de conserver sa résistance au fluage.

Etant donné que le film polymère (5) permet de diminuer la déformation plastique maximale de la mousse, celui-ci permet alors de diminuer la densité de la mousse tout en restant conforme en résistance au fluage.

En effet, des tests ont été effectués par le Demandeur avec un film polymère (5) en Polytéréphtalate d'éthylène (PET) présentant une épaisseur de 0,125 mm, et avec différentes densités de mousses.

Selon les tests résultants du tableau ci-après, la formulation du plastisol utilisé pour la conception des mousses reste la même, seule la densité de la mousse varie. Le film polymère (5) est intercalé directement entre la mousse PVC et la face envers de la couche d'usure (2). A titre d'exemple, la mousse utilisée comprend 34% en poids de plastifiant, 8% en poids de charge, 53% en poids de polychlorure de vinyle et 5% en poids d'autres additifs.

Le tableau ci-dessous récapitule les valeurs de déformation résiduelles en réponse au poinçonnement défini dans la norme, et montrent que la densité de la mousse peut être diminuée tout en permettant d'obtenir des résultats de résistance au poinçonnement équivalents.

| ***Numéro d'échantillon*** | ***Densité de la mousse*** | ***Poinçonnement (mm)*** |
|---|---|---|
| N°1 | 0,30 | *0,07* |
| N°2 | 0,31 | *0,08* |
| N°3 | 0,33 | *0,06* |
| N°4 | 0,34 | *0,06* |

A titre d'exemple non limitatif, en référence à la figure 1 la structure multicouche (1) comprend :
- une couche d'usure (2), constituée :
   - d'une couche de surface (4) transparente en PVC présentant une épaisseur comprise entre 0,25 mm et 0,75 mm, par exemple 0,5 mm, comprenant 27% en poids de plastifiant, 70% en poids de PVC, 3% en poids d'autres additifs et sur laquelle est déposé un vernis polyuréthane (6) ;
   - d'un film de décor (7) en PVC présentant une épaisseur comprise entre 0,05 mm et 0,3 mm, par exemple 0,15 mm, lié à la face envers de la couche de surface (4) ;
   - d'une couche envers (8) en PVC calandré présentant une épaisseur comprise entre 0,5 mm et 1,5 mm, par exemple 0,8 mm, comprenant 17% en poids de plastifiant, 43% en poids de charge, 39% en poids de PVC et 1% en poids d'autres additifs ;
- un film polymère (5) (voir tableau ci-dessous) ;
- une couche de mousse (3) en PVC plastifié, présentant une épaisseur de comprise entre 1 mm et 1 cm, par exemple 4,2 mm, entre 30 et 38% en poids de plastifiant, entre 6% et 10% en poids de charge, entre 40% et 60% en poids de PVC et entre 4% et 6% en poids d'autres additifs.

Plusieurs types de film polymère (5) ont été testés et les résultats ont été compilés dans le tableau suivant :

| ***Support*** | ***Module d'Young (GPa)*** | ***Raideur (N*/*mm)*** | ***Epaisseur (mm)*** | ***Poinçonnement (mm)*** | ***Poinçonnement*** |
|---|---|---|---|---|---|
| Non tissé polyester + Grille de verre (REF) | 2,34 | 169,0 | 0,200 | ***0,20-0,25*** | Standard |
| Film PVC | 1,39 | 97,1 | 0,150 | ***0,20-0,25*** | Standard |
| PET non-stabilisé | 4,03 | 100,6 | 0,050 | ***0,08*** | Bon |
| PET non-stabilisé | 3,88 | 145,4 | 0,075 | ***0,10*** | Bon |
| PET stabilisé | 3,31 | 206,7 | 0,125 | ***0,07*** | Bon |
| PET non-stabilisé | 3,35 | 209,4 | 0,125 | ***0,07*** | Bon |
| PMMA | 1,78 | 214,1 | 0,250 | ***0,07*** | Bon |
| PPS | 3,10 | 157,0 | 0,100 | ***0,08*** | Bon |
| PVC Rigide | 2,44 | 265,2 | 0,210-0,230 | ***0,09*** | Bon |

Remarque : dans l'exemple mettant en œuvre un film de PVC rigide en tant que film polymère (5), on entend par PVC rigide un film de PVC comprenant moins de 10% en poids de plastifiant. Un film PET est dit stabilisé s'il a subi un traitement thermique de relaxation des contraintes induites durant sa fabrication par extrusion dans une filière plate suivi d'un étirage bi-orienté.

Sur le tableau ci-dessus, on remarque que les meilleurs résultats en termes de résistance au poinçonnement sont obtenus avec un film polyéthylène téréphtalate (PET) stabilisé présentant une épaisseur de 0.125 mm, avec un film polyméthacrylate de méthyle (PMMA) présentant une épaisseur de 0.250 mm, ou avec un film polysulfure de phénylène (PPS) présentant une épaisseur de 0.1 mm.

Selon un deuxième exemple illustré à la figure 2, la structure multicouche (1) comprend :
- une couche d'usure (2), constituée :
   - d'une couche de surface (4) transparente en PVC présentant une épaisseur comprise entre 0,25 mm et 0,75 mm, avec un grainage et sur laquelle est déposé un vernis polyuréthane (6) ;
   - d'une couche envers (8) en PVC calandré présentant une épaisseur comprise entre 0,5 mm et 1,5 mm ;
- un film polymère (5) (voir tableau ci-dessus) ;
- une couche de mousse (3) en PVC plastifié, présentant une épaisseur de comprise entre 1 mm et 1 cm.

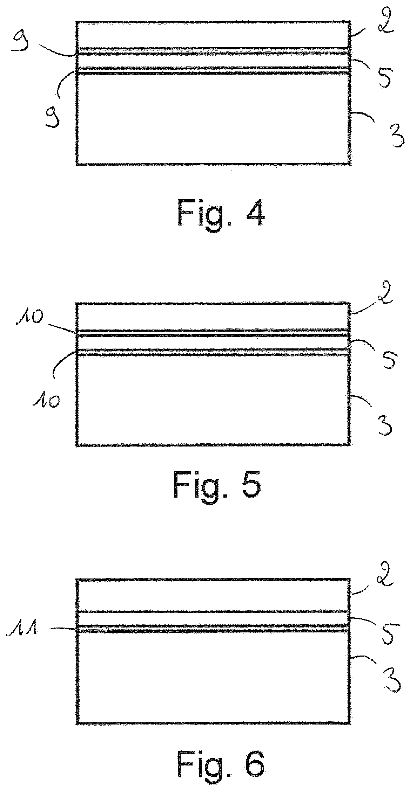

En pratique, et en référence à la figure 4, lors de la fabrication de la structure multicouche (1) selon l'invention, si le film polymère (5) utilisé est un film de PET, et que celui-ci est intercalé entre la face envers de la couche d'usure (2) et la mousse, le film de PET est de préférence complexé entre deux couches de copolyester (9) pour améliorer l'adhérence entre le film PET et le PVC de la mousse et de l'envers de la couche d'usure (2). Les couches de copolyester (9) présentent une épaisseur entre 1µm et 10 µm avec une température de travail préférentielle pour avoir l'adhérence la plus forte possible. Pour améliorer davantage l'adhérence du copolyester (9) sur la mousse de PVC, l'homme du métier saura ajuster l'épaisseur des couches de copolyester (9) ou encore la formulation de celles-ci, afin de se rapprocher des conditions optimales de collage vis-à-vis du procédé d'enduction de la couche de mousse (3).

D'une manière particulière, et afin de faciliter le collage de la mousse sur le film polymère (5), il est également possible de lier la face envers du film polymère (5) avec un voile de verre ou un textile non-tissé (10) sur lequel la couche de mousse (3) est directement enduite. Ceci permet d'obtenir une véritable imprégnation de la mousse sur le support non-tissé. Le film polymère (5) peut être complexé entre deux voiles de verre ou textiles non-tissés (10).

Sinon, en référence à la figure 3, et afin d'éviter tout problème d'adhérence entre la mousse PVC et le film PET, ledit film est de préférence intercalé dans l'épaisseur de la couche d'usure (2) entre deux couches calandrées (2a). Le film PET est donc collé à chaud dans l'une des couches calandrées ou en envers de celle-ci.

En référence à la figure 6, et afin d'améliorer la tenue du film polymère (5) lors de sa manipulation dans le procédé de fabrication de la structure multicouche (1), le film polymère (5) forme un complexe avec au moins une grille de renfort (11).

Par exemple, le film polymère (5) est complexé avec une grille de verre avec un liant PVAC. La grille de verre présente par exemple un poids de 34,5 g/m² et une épaisseur de 0.145 mm. Un autre exemple consiste à complexer le film polymère (5) avec une grille de polyester avec un liant éthylène-vinyle-acétate (EVA). La grille de polyester présente par exemple un poids de 45 g/m² et une épaisseur de 0,22 mm.

Il ressort de ce qui précède que l'invention fournit bien une structure multicouche (1) pour la réalisation d'un revêtement de sol sportif et polyvalent, permettant d'absorber au moins 25% des chocs ponctuels, tout en permettant de résister au trafic, aux charges lourdes et au poinçonnement, avec une déformation inférieure à 0,1 mm selon le test défini dans la norme.

## Revendications

1. Structure multicouche (1) pour la réalisation d'un revêtement de sol sportif et polyvalent, ladite structure multicouche (1) comprenant une couche supérieure d'usure (2) composée d'au moins une couche de surface (4), la couche d'usure (2) étant liée à une couche d'envers (3) en mousse de polychlorure de vinyle, ***caractérisée* en ce qu'**elle comprend un film polymère (5) thermoplastique, choisi parmi le polychlorure de vinyle, le polyméthacrylate de méthyle, le polyéthylène téréphtalate glycol, le polysulfure de phénylène, disposé entre la couche de surface (4) et la couche d'envers (3), et présentant une raideur supérieure à 100 N/mm (comme définie dans la description) et un module d'Young supérieur à 1,5 GPa.

2. Structure multicouche (1) selon la revendication 1*,* ***caractérisée* en ce que** le film polymère (5) présente une épaisseur supérieure à 30 µm.

3. Structure multicouche (1) selon la revendication 2, ***caractérisée* en ce que** le film polymère (5) présente une épaisseur comprise entre 50 µm et 250 µm.

4. Structure multicouche (1) selon la revendication 1*,* ***caractérisée* en ce que** le film polymère (5) présente une raideur comprise entr*e* 100 N/mm et 300 N/mm.

5. Structure multicouche (1) selon la revendication 1, ***caractérisée* en ce que** le film polymère (5) présente un module d'Young compris entre 1,5 GPa et 5 GPa.

6. Structure multicouche (1) selon la revendication 1*,* ***caractérisée* en ce que** le film polymère (5) comprend du polychlorure de vinyle et moins de 10% en poids de plastifiant.

7. Structure multicouche (1) selon la revendication 1*,* ***caractérisée* en ce que** le film polymère (5) forme un complexe avec au moins un voile de verre ou un textile non-tissé (10) disposé sur la face du film (5) destinée à être en contact avec la couche d'envers (3) de mousse de polychlorure de vinyle.

8. Structure multicouche (1) selon la revendication 1*,* ***caractérisée* en ce que** le film polymère (5) forme un complexe avec au moins une grille de renfort (11).

9. Structure multicouche (1) selon la revendication 1*,* ***caractérisée* en ce que** le film polymère (5) est intégré dans l'épaisseur de la couche d'usure (2).

10. Structure multicouche (1) selon la revendication 1*,* ***caractérisée* en ce que** la couche d'envers (3) en mousse de polychlorure de vinyle est réalisée à partir de Plastisol expansé et présente une densité comprise entre 0,30 et 0,50.

11. Structure multicouche (1) selon la revendication 1*,* ***caractérisée* en ce que** la couche d'envers (3) en mousse de polychlorure de vinyle présente une épaisseur comprise entre 1 mm et 1 cm.

12. Structure multicouche (1) selon la revendication 1*,* ***caractérisée* en ce que** la couche supérieure d'usure (2) est composée d'au moins une couche de surface (4) transparente et d'un film décor (7) lié en envers de la couche de surface (4).

## Patentansprüche

1. Mehrschichtstruktur (1) zur Herstellung eines vielseitig einsetzbaren Sportbodenbelags, wobei die Mehrschichtstruktur (1) eine obere Nutzschicht (2) umfasst, die aus mindestens einer Oberflächenschicht (4) besteht, wobei die Nutzschicht (2) mit einer Rückenschicht (3) aus Polyvinylchlorid-Schaumstoff verbunden ist, **dadurch gekennzeichnet, dass** sie eine thermoplastische Polymerfolie (5) umfasst, die aus Polyvinylchlorid, Polymethylmethacrylat, Polyethylenterephthalatglykol und Polyphenylensulfid ausgewählt ist, zwischen der Oberflächenschicht (4) und der Rückenschicht (3) angeordnet ist und eine Steifigkeit von mehr als 100 N/mm (wie in der Beschreibung definiert) sowie einen Elastizitätsmodul (Young-Modul) von mehr als 1,5 GPa aufweist.

2. Mehrschichtstruktur (1) nach Anspruch 1, **dadurch gekennzeichnet, dass** die Polymerfolie (5) eine Dicke von mehr als 30 µm aufweist.

3. Mehrschichtstruktur (1) nach Anspruch 2, **dadurch gekennzeichnet, dass** die Polymerfolie (5) eine Dicke zwischen 50 µm und 250 µm aufweist.

4. Mehrschichtstruktur (1) nach Anspruch 1, **dadurch gekennzeichnet, dass** die Polymerfolie (5) eine Steifigkeit zwischen 100 N/mm und 300 N/mm aufweist.

5. Mehrschichtstruktur (1) nach Anspruch 1, **dadurch gekennzeichnet, dass** die Polymerfolie (5) einen Elastizitätsmodul (Young-Modul) zwischen 1,5 GPa und 5 GPa aufweist.

6. Mehrschichtstruktur (1) nach Anspruch 1, **dadurch gekennzeichnet, dass** die Polymerfolie (5) Polyvinylchlorid und weniger als 10 Gew.-% Weichmacher umfasst.

7. Mehrschichtstruktur (1) nach Anspruch 1, **dadurch gekennzeichnet, dass** die Polymerfolie (5) mit mindestens einem Glasvlies oder einem Vliesstoff (10) einen Verbund bildet, der auf der Seite der Folie (5) angeordnet ist, die zum Kontakt mit der Rückenschicht (3) aus Polyvinylchlorid-Schaumstoff bestimmt ist.

8. Mehrschichtstruktur (1) nach Anspruch 1, **dadurch gekennzeichnet, dass** die Polymerfolie (5) mit mindestens einem Verstärkungsgitter (11) einen Verbund bildet.

9. Mehrschichtstruktur (1) nach Anspruch 1, **dadurch gekennzeichnet, dass** die Polymerfolie (5) in die Dicke der Nutzschicht (2) integriert ist.

10. Mehrschichtstruktur (1) nach Anspruch 1, **dadurch gekennzeichnet, dass** die Rückenschicht (3) aus Polyvinylchlorid-Schaumstoff aus aufgeschäumtem Plastisol hergestellt ist und eine Dichte zwischen 0,30 und 0,50 aufweist.

11. Mehrschichtstruktur (1) nach Anspruch 1, **dadurch gekennzeichnet, dass** die Rückenschicht (3) aus Polyvinylchlorid-Schaumstoff eine Dicke zwischen 1 mm und 1 cm aufweist.

12. Mehrschichtstruktur (1) nach Anspruch 1, **dadurch gekennzeichnet, dass** die obere Nutzschicht (2) aus mindestens einer transparenten Oberflächenschicht (4) und einer Dekorfolie (7) besteht, die mit der Rückseite der Oberflächenschicht (4) verbunden ist.

## Claims

1. Multilayer structure (1) for producing a sports and multipurpose floor covering, said multilayer structure (1) comprising an upper wear layer (2) composed of at least one surface layer (4), the wear layer (2) being bonded to a backing layer (3) of polyvinyl chloride foam, **characterized in that** it comprises a thermoplastic polymer film (5), chosen from polyvinyl chloride, polymethyl methacrylate, polyethylene terephthalate glycol and polyphenylene sulfide, arranged between the surface layer (4) and the backing layer (3), and having a stiffness greater than 100 N/mm (as defined in the description) and a Young's modulus greater than 1.5 GPa.

2. Multilayer structure (1) according to claim 1, **characterized in that** the polymer film (5) has a thickness greater than 30 µm.

3. Multilayer structure (1) according to claim 2, **characterized in that** the polymer film (5) has a thickness between 50 µm and 250 µm.

4. Multilayer structure (1) according to claim 1, **characterized in that** the polymer film (5) has a stiffness between 100 N/mm and 300 N/mm.

5. Multilayer structure (1) according to claim 1, **characterized in that** the polymer film (5) has a Young's modulus between 1.5 GPa and 5 GPa.

6. Multilayer structure (1) according to claim 1, **characterized in that** the polymer film (5) comprises polyvinyl chloride and less than 10% by weight of plasticizer.

7. Multilayer structure (1) according to claim 1, **characterized in that** the polymer film (5) forms a laminate with at least one glass veil or nonwoven textile (10) arranged on the face of the film (5) intended to be in contact with the backing layer (3) of polyvinyl chloride foam.

8. Multilayer structure (1) according to claim 1, **characterized in that** the polymer film (5) forms a laminate with at least one reinforcing grid (11).

9. Multilayer structure (1) according to claim 1, **characterized in that** the polymer film (5) is integrated in the thickness of the wear layer (2).

10. Multilayer structure (1) according to claim 1, **characterized in that** the backing layer (3) of polyvinyl chloride foam is made from expanded plastisol and has a density between 0.30 and 0.50.

11. Multilayer structure (1) according to claim 1, **characterized in that** the backing layer (3) of polyvinyl chloride foam has a thickness between 1 mm and 1 cm.

12. Multilayer structure (1) according to claim 1, **characterized in that** the upper wear layer (2) is composed of at least one transparent surface layer (4) and a decorative film (7) bonded to the back of the surface layer (4).
